# EUROPEAN PATENT APPLICATION

(11) **EP 4 718 543 A2**
(43) Date of publication of application: **01.04.2026**
(21) Application number: 25203221.4
(22) Date of filing: 29.10.2021
(51) Int. Cl.: H01M 4/82

(54) **BATTERY CURRENT COLLECTOR AND PREPARATION METHOD THEREOF, SECONDARY BATTERY, BATTERY MODULE, BATTERY PACK, AND ELECTRIC APPARATUS**

(62) Divisional of application: 21928363.7
(71) Applicant: Contemporary Amperex Technology (Hong Kong) Limited, Hong Kong (HK)
(72) Inventor: WANG, Manman, Ningde, 352100 (CN); GE, Xiaoming, Ningde, 352100 (CN)
(74) Representative: Gong, Jinping

(57) **Abstract**

This application provides a battery current collector and a preparation method thereof, a secondary battery, a battery module, a battery pack, and an electric apparatus. The battery current collector includes a foam metal layer (1) and a strength enhancement layer (2), where the strength enhancement layer (2) is a sheet-shaped metal layer, and the strength enhancement layer (2) and the foam metal layer (1) are stacked and metallurgically bonded, alleviating a problem of poor mechanical performance of current collectors in the related art. The strength enhancement layer (2) and the foam metal layer (1) are connected by metallurgical bonding, which helps ensure not only structural strength of the strength enhancement layer (2) and the foam metal layer (1), but also good conductivity between the strength enhancement layer (2) and the foam metal layer (1). Further, the manner of metallurgical bonding helps reduce production costs.

## Description

### TECHNICAL FIELD

This application relates to the field of battery technologies, and in particular, to a battery current collector and a preparation method thereof, a secondary battery, a battery module, a battery pack, and an electric apparatus.

### BACKGROUND

With growing demands for energy and increasing environmental awareness, people are paying increasing attention to new energy.

Secondary batteries are a kind of common new energy, and a current collector is an important component of a secondary battery. The current collector not only carries active substances, but also collects electrons in an electrochemical reaction and conducts the electrons to an external circuit, so as to implement a process of converting chemical energy into electric energy. A foam-metal current collector has poor mechanical performance. As a result, when the foam-metal current collector is used as a negative current collector, a tab formed through punching or a welded tab has problems such as being low in strength and easy to torn.

### SUMMARY

This application provides a battery current collector and a preparation method thereof, a secondary battery, a battery module, a battery pack, and an electric apparatus, alleviating a problem of poor mechanical performance of a foam-metal current collector in the related art.

According to an aspect of this application, a battery current collector for battery cell is provided. The battery current collector includes a foam metal layer and a strength enhancement layer, where the strength enhancement layer is a sheet-shaped metal layer, and the strength enhancement layer and the foam metal layer are stacked and metallurgically bonded, alleviating a problem of poor mechanical performance of a current collector in the related art. The strength enhancement layer and the foam metal layer are connected by metallurgical bonding, and atoms on an interface between the strength enhancement layer and the foam metal layer mutually diffuse to bond. Therefore, a manner of connection by metallurgical bonding helps ensure not only structural strength of the strength enhancement layer and the foam metal layer, but also good conductivity between the strength enhancement layer and the foam metal layer. Further, the manner of metallurgical bonding helps reduce production costs.

In some embodiments, the foam metal layer and the strength enhancement layer are welded together, with advantages of simple processing technology and high production efficiency.

In some embodiments, the foam metal layer and the strength enhancement layer are sintered as a whole, and a material and parameters of the current collector can be controlled by controlling compositions of metal powder or a ratio of different powders (for example, porosity is controlled by controlling a proportion of a pore-forming agent), so that performance parameters of the current collector can be adjusted based on actual needs. Further, the foam metal layer and the strength enhancement layer being sintered helps reduce residue stress generated in the connection process, thereby ensuring that the current collector does not crack during winding.

In some embodiments, the foam metal layer includes a first foam metal layer disposed on one side of the strength enhancement layer and a second foam metal layer disposed on the other side of the strength enhancement layer, so that the current collector has a symmetrical electrode structure.

In some embodiments, the strength enhancement layer is provided with a through hole, so that electrolytes on two sides of the strength enhancement layer flow to each other.

In some embodiments, the battery current collector includes a current collector body and an end portion located on an outer side of the current collector body along a width direction and used for forming a tab, where the current collector body includes the foam metal layer and the strength enhancement layer that are stacked, and the end portion includes the strength enhancement layer, to ensure mechanical performance of an area of the current collector for forming the tab, thereby avoiding a defect when the tab on one end of the current collector is welded to a conductive component.

In some embodiments, both ends of the strength enhancement layer in the width direction are flush with the foam metal layer, and the end portion of the current collector used for forming the tab includes the strength enhancement layer, so as to ensure the mechanical performance of the area of the current collector for forming the tab, thereby avoiding a defect when the tab on one end of the current collector is welded to the conductive component.

In some embodiments, one end of the strength enhancement layer in the width direction protrudes from the foam metal layer, the other end is flush with the foam metal layer, and the strength enhancement layer for constituting a tab is reserved on one end of the current collector, which helps simplify processing procedures of battery and improve production efficiency.

Both ends of the strength enhancement layer in the width direction protrude from the foam metal layer, and the strength enhancement layer for constituting tabs is reserved on both ends of the current collector, which helps simplify processing procedures of battery and improve production efficiency. Further, the strength enhancement layer for constituting tabs being reserved on both ends of the current collector provides more options for subsequent procedures.

In some embodiments, the foam metal layer is made of at least one of copper, nickel, aluminum, iron, magnesium, titanium, steel, and alloy; and the strength enhancement layer is made of at least one of copper, nickel, aluminum, iron, magnesium, titanium, steel, and alloy, so that the current collector has good bending resistance and easy bending performance, facilitating winding of the current collector.

In some embodiments, thickness of the foam metal layer is 10 µm-100 µm; and thickness of the strength enhancement layer is 4 µm-12 µm, which ensures full contact between the foam metal layer and active substances of the battery and can also ensure good bending resistance of the current collector.

In some embodiments, porosity of the foam metal layer is 20%-90%, and optionally, the porosity of the foam metal layer 1 is 80%-85%, which ensures full contact between the foam metal layer and the active substances of the battery and can also ensure good bending resistance of the current collector.

According to another aspect of this application, a preparation method of the battery current collector is further provided. The preparation method includes a material compression step and a sintering step, where the material compression step includes: laying a first layer of material for forming a foam metal layer and compressing the first layer of material; and laying a second layer of material for forming a strength enhancement layer on a first layer of blank and compressing the second layer of material into a second layer of blank, where the second layer of material includes metal powder; and the sintering step includes: sintering the compressed materials formed in the material compression step. A material and parameters of the current collector can be controlled by controlling compositions of metal powder or a ratio of different powders (for example, porosity is controlled by controlling a proportion of a pore-forming agent), so that performance parameters of the current collector can be adjusted based on actual needs. Further, the foam metal layer and the strength enhancement layer being sintered helps reduce residue stress generated in the connection process, thereby ensuring that the current collector does not crack during winding.

In some embodiments, the material compression step further includes: laying a third layer of material for forming the foam metal layer on the second layer of blank and compressing the third layer of material into a third layer of blank, where the third layer of material includes metal powder and a pore-forming agent mixed in the metal powder, so that the current collector has a symmetrical electrode structure.

In some embodiments, compressing pressure for the first layer of material is less than or equal to compressing pressure for the third layer of material, allowing the first foam metal layer and the second foam metal layer to have consistent performance parameters.

In some embodiments, the compressing pressure for the first layer of material is 150 MPa-350 MPa; and the compressing pressure for the third layer of material is 150 MPa-350 MPa.

In some embodiments, the materials are in a protection atmosphere of inert gas when being sintered, to prevent the metal powder from being oxidized during sintering; and/or sintering temperature of the materials is 700°C-1000°C; and/or sintering duration of the materials is 5 hours-8 hours.

According to another aspect of this application, a preparation method of the battery current collector is further provided, including a welding step and a foaming step. The welding step includes: stacking an alloy foil for forming a foam metal layer and a metal foil for forming a strength enhancement layer, and heating the alloy foil and the metal foil so that the alloy foil and the metal foil are welded together to form an intermediate; and the foaming step includes: placing the intermediate into a corrosive solution to remove one or more elements in the alloy foil, so that the alloy foil forms the foam metal layer. The foam metal layer and the strength enhancement layer are welded together, with advantages of simple processing technology and high production efficiency.

In some embodiments, in the welding step, the alloy foil is stacked on both sides of the metal foil, so that the current collector has a symmetrical electrode structure.

In some embodiments, the corrosive solution includes at least one of a diluted hydrochloric acid solution, an ammonium sulfate solution, an electrolyte obtained by mixing H₂SO₄ and MnSO₄, an acetic acid solution, a phosphoric acid solution, and a sulphuric acid solution; and/or the alloy foil includes a brass foil; and/or the metal foil includes a pure cooper foil.

In some embodiments, a plurality of through holes are formed on the metal foil before the alloy foil and the metal foil are stacked, so that electrolytes on two sides of the strength enhancement layer flow to each other.

According to another aspect of this application, a secondary battery is further provided, where the secondary battery includes the foregoing battery current collector or a battery current collector prepared by using the foregoing preparation method.

According to another aspect of this application, a battery module is further provided, where the battery module includes the foregoing secondary battery.

According to another aspect of this application, a battery pack is further provided, where the battery pack includes the foregoing secondary battery.

According to another aspect of this application, an electric apparatus is further provided, where the electric apparatus includes at least one of the foregoing secondary battery, the foregoing battery module, or the foregoing battery pack.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a battery current collector disclosed in an optional embodiment of this application;
FIG. 2 is a schematic structural diagram of a battery current collector disclosed in another optional embodiment of this application; and
FIG. 3 is a schematic structural diagram of a battery current collector disclosed in another optional embodiment of this application.
FIG. 4 is a schematic diagram of a secondary battery according to an embodiment of this application.
FIG. 5 is an exploded view of the secondary battery according to the embodiment of this application in FIG. 4.
FIG. 6 is a schematic diagram of a battery module according to an embodiment of this application.
FIG. 7 is a principle diagram of a tab tension test according to an embodiment of this application.

In the accompanying drawings, the figures are not drawn to scale.

Reference signs: 1. foam metal layer; 11. first foam metal layer; 12. second foam metal layer; 2. strength enhancement layer; 4. battery module; 5. secondary battery; 51. housing; 52. electrode assembly; 53. top cover assembly; 6. clamp; 7. adapting sheet; and 8. foil.

### DESCRIPTION OF EMBODIMENTS

The following further describes the embodiments of this application in detail with reference to the accompanying drawings and examples. The detailed description and accompanying drawings of the following embodiments are used to exemplarily illustrate the principle of this application, but are not intended to limit the scope of this application, that is, this application is not limited to the described embodiments.

In the descriptions of this application, it should be noted that, unless otherwise stated, "a plurality of" means two or more; and the orientations or positional relationships indicated by the terms "upper", "lower", "left", "right", "inside", "outside", and the like are merely intended to help the descriptions of this application and simplify the descriptions other than indicate or imply that the apparatuses or components must have specific orientations, or be constructed and manipulated with specific orientations, and therefore shall not be understood as limitations on this application. In addition, the terms "first", "second", "third", and the like are merely intended for a purpose of description, and shall not be understood as an indication or implication of relative importance. "Vertical" means being vertical with an allowable range of error other than being strictly vertical. "Parallel" means being parallel with an allowable range of error other than being strictly parallel.

The orientation terms appearing in the following description all are directions shown in the figures, and do not limit the specific structure in this application. In the descriptions of this application, it should be further noted that unless otherwise specified and defined explicitly, the terms "mounted", "interconnected", and "connected" should be understood in their general senses. For example, the terms may be fixedly connected, or detachably connected, or integrally connected, or may be directly connected, or indirectly connected through an intermediate medium. A person of ordinary skill in the art can understand specific meanings of these terms in this application based on specific situations.

"Ranges" disclosed in this application are defined in the form of lower and upper limits, given ranges are defined by selecting lower and upper limits, and the selected lower and upper limits define boundaries of special ranges. Ranges defined in the method may or may not include end values, and any combination may be used, that is, any lower limit may be combined with any upper limit to form a range. For example, if ranges of 60 to 120 and 80 to 110 are provided for a specific parameter, it should be understood that ranges of 60 to 110 and 80 to 120 are also expectable. In addition, if minimum values of a range are set to 1 and 2, and maximum values of the range are set to 3, 4, and 5, the following ranges are all expectable: 1 to 3, 1 to 4, 1 to 5, 2 to 3, 2 to 4, and 2 to 5. In this application, unless otherwise stated, a value range of "a to b" represents an abbreviated representation of any combination of real numbers between a and b, where both a and b are real numbers. For example, a value range of "0 to 5" means that all real numbers from "0 to 5" are listed herein, and "0-5" is just an abbreviated representation of a combination of these values. In addition, when a parameter is expressed as an integer greater than or equal to 2, this is equivalent to disclosure that the parameter is, for example, an integer: 2, 3, 4, 5, 6, 7, 8, 9, 10, 11, or 12.

Unless otherwise specified, all the embodiments and optional embodiments of this application can be mutually combined to form a new technical solution.

Unless otherwise specified, all the technical features and optional technical features of this application can be mutually combined to form a new technical solution.

Unless otherwise specified, all the steps in this application can be performed sequentially or randomly, and preferably, are performed sequentially. For example, a method including steps (a) and (b) indicates that the method may include steps (a) and (b) performed in sequence, or may include steps (b) and (a) performed in sequence. For example, that the method may further include step (c) indicates that step (c) may be added to the method in any order. For example, the method may include steps (a), (b), and (c), steps (a), (c), and (b), steps (c), (a), and (b), or the like.

Unless otherwise specified, "include" and "contain" mentioned in this application is inclusive or may be exclusive. For example, the "include" and "contain" can mean that other unlisted components may also be included or contained, or only listed components may be included or contained.

Unless otherwise specified, in this application, the term "or" is inclusive. For example, a phrase "A or B" means "A, B, or both A and B". More specifically, any one of the following conditions satisfies the condition "A or B": A is true (or present) and B is false (or not present); A is false (or not present) and B is true (or present); or both A and B are true (or present).

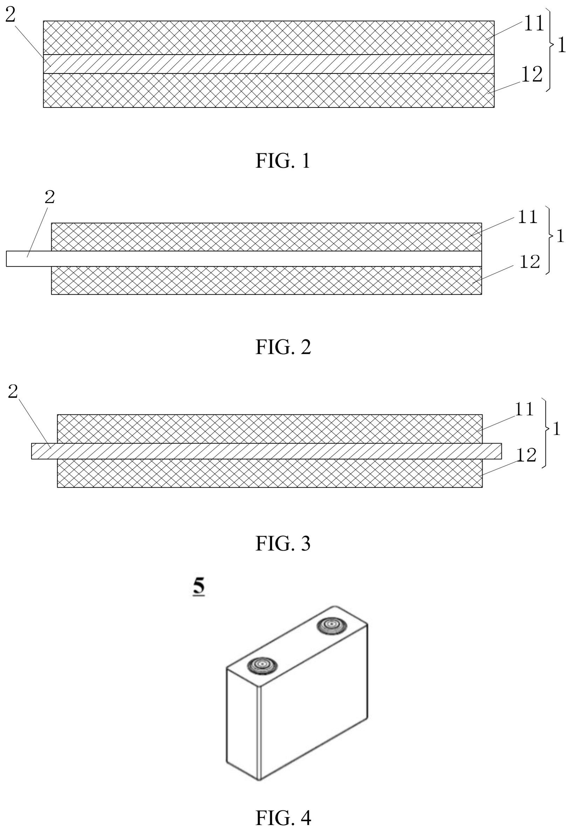

As shown in FIG. 1 to FIG. 3, to alleviate a problem of easy tearing in punching a tab on an end portion of a current collector or in welding a tab of a battery current collector to a conductive component in the related art, the battery current collector in this embodiment includes a foam metal layer 1 and a strength enhancement layer 2 stacked with the foam metal layer 1.

A substrate of the foam metal layer 1 has a large quantity of connected or disconnected holes, so that the substrate of the foam metal layer 1 is in full contact with active substances of a battery.

The strength enhancement layer 2 is a sheet-shaped metal layer. The sheet-shaped metal layer in this application is a metal sheet-shaped structure of a non-foam structure with no pore inside. It should be noted that the non-foam structure with no pore inside may have through holes or surface pits. The battery current collector in this embodiment includes the strength enhancement layer 2, alleviating the problem of poor mechanical performance of a current collector in the related art.

In this embodiment, the strength enhancement layer 2 and the foam metal layer are metallurgically bonded. Metallurgical bonding is a kind of bonding formed by mutual diffusion of atoms on an interface between two metal components, and such bonding or connection state is formed under the action of temperature and/or pressure. The strength enhancement layer 2 and the foam metal layer 1 are connected by metallurgical bonding, and atoms on an interface between the strength enhancement layer and the foam metal layer mutually diffuse to bond. Compared with other bonding manners such as adhesion, a manner of connection by metallurgical bonding helps ensure not only structural strength of the strength enhancement layer 2 and the foam metal layer 1, but also good conductivity between the strength enhancement layer 2 and the foam metal layer 1. Further, the manner of metallurgical bonding helps reduce production costs.

In some embodiments, the strength enhancement layer 2 is made of copper. The strength enhancement layer 2 made of copper not only improves mechanical performance of the current collector, but also makes the current collector have good weldability and conductivity. Further, the strength enhancement layer 2 made of copper helps ensure bending resistance of the current collector, to prevent the current collector from cracking during winding. The strength enhancement layer 2 may alternatively be made of other materials with good strength, conductivity, and plasticity, such as nickel, aluminum, iron, magnesium, titanium, steel, and alloy.

In some embodiments, the foam metal layer 1 includes foamy copper. The foamy copper has good conductivity, to help reduce internal resistance of the battery. The foamy copper also has good bending resistance, to prevent the current collector from cracking during winding. The foam metal layer 1 may alternatively be made of other materials with good conductivity and plasticity, such as nickel, aluminum, iron, magnesium, titanium, steel, and alloy.

In some embodiments, the foam metal layer 1 and the strength enhancement layer 2 are welded together. The current collector is formed by welding together an alloy foil for forming the foam metal layer 1 and a metal foil for forming the strength enhancement layer 2. In this embodiment, the alloy foil and the metal foil are welded together to form the current collector, with advantages of simple processing technology and high production efficiency.

In some other embodiments, the foam metal layer 1 and the strength enhancement layer 2 are sintered as a whole. The foam metal layer 1 and the strength enhancement layer 2 each are sintered by using different metal powders, and the foam metal layer 1 and the strength enhancement layer 2 are combined through sintering. During production, a material and parameters of the current collector can be controlled by controlling compositions of metal powder or a ratio of different powders (for example, porosity is controlled by controlling a proportion of a pore-forming agent), so that performance parameters of the current collector can be adjusted based on actual needs. Further, the foam metal layer 1 and the strength enhancement layer 2 being sintered helps reduce residue stress generated in the connection process, thereby ensuring that the current collector does not crack during winding.

In some embodiments, the foam metal layer 1 includes a first foam metal layer 11 disposed on one side of the strength enhancement layer 2 and a second foam metal layer 12 disposed on the other side of the strength enhancement layer 2, so that the current collector has a symmetrical electrode structure.

The strength enhancement layer 2 is provided with a through hole, so that electrolytes on two sides of the strength enhancement layer 2 flow to each other.

The battery current collector includes a current collector body and an end portion located on an outer side of the current collector body along a width direction and used for forming a tab, where the current collector body includes the foam metal layer 1 and the strength enhancement layer 2 that are stacked, and the end portion includes the strength enhancement layer 2, to ensure mechanical performance of an area of the current collector for forming the tab, thereby avoiding a defect when the tab on one end of the current collector is welded to a conductive component.

As shown in FIG. 1, in some optional embodiments of this application, both ends of the strength enhancement layer 2 in the width direction are flush with the foam metal layer 1, and the end portion of the current collector used for forming the tab includes the strength enhancement layer 2, so as to ensure the mechanical performance of the area of the current collector for forming the tab, thereby avoiding a defect when the tab on one end of the current collector is welded to the conductive component.

As shown in FIG. 2, in some other optional embodiments of this application, one end of the strength enhancement layer 2 in the width direction protrudes from the foam metal layer 1, the other end is flush with the foam metal layer 1, and a part of the strength enhancement layer 2 protruding from the foam metal layer 1 is used for constituting a tab of the current collector. The strength enhancement layer 2 for constituting a tab is reserved on one end of the current collector, which helps simplify processing procedures of battery and improve production efficiency.

As shown in FIG. 3, in some other optional embodiments of this application, both ends of the strength enhancement layer 2 in the width direction protrude from the foam metal layer 1, and the strength enhancement layer 2 for constituting tabs is reserved on both ends of the current collector, which helps simplify processing procedures of battery and improve production efficiency. Further, the strength enhancement layer 2 for constituting tabs being reserved on both ends of the current collector provides more options for subsequent procedures.

In some embodiments, thickness of the foam metal layer 1 is 10 µm-100 µm. If the foam metal layer 1 is too thin, pores in the foam metal layer 1 are fewer correspondingly, and a contact area between the foam metal layer 1 and the active substances of the battery is smaller. If the foam metal layer 1 is too thick, bending resistance of the foam metal layer 1 deteriorates, and the current collector easily cracks during winding. The thickness of the foam metal layer 1 being 10 µm-100 µm ensures full contact between the foam metal layer 1 and the active substances of the battery and can also ensure good bending resistance of the current collector.

In some embodiments, thickness of the strength enhancement layer 2 is 4 µm-12 µm. A greater thickness of the strength enhancement layer 2 means better mechanical performance but poorer bending performance of the current collector, so that the current collector is not easily wound. The thickness of the strength enhancement layer 2 being 4 µm-12 µm ensures good mechanical performance of the current collector and can also ensure easy bending performance of the current collector.

In some embodiments, porosity of the foam metal layer 1 is 20%-90%. Porosity is a percentage of a volume of pores inside a porous solid material in a total volume of the material. A greater porosity of the foam metal layer 1 means a larger contact area between the foam metal layer 1 and the active substances of the battery but poorer bending resistance of the foam metal layer 1, so that the current collector easily cracks during winding. The porosity of the foam metal layer 1 being 20%-90% ensures full contact between the foam metal layer 1 and the active substances of the battery and can also ensure good bending resistance of the current collector.

In some other embodiments, the porosity of the foam metal layer 1 is 80%-85%, and a battery using a battery current collector with the porosity of the foam metal layer 1 being 80%-85% has high volumetric energy density. After the porosity is increased from 20% to 80% or 85%, mass energy density can be increased by about 58%.

According to another aspect of this application, a preparation method of the battery current collector is further provided, and the preparation method includes a material compression step and a sintering step.

The material compression step includes: laying a first layer of material for forming a foam metal layer 1 and compressing the first layer of material into a first layer of blank, where the first layer of material includes metal powder and a pore-forming agent mixed in the metal powder; and laying a second layer of material for forming a strength enhancement layer 2 on the first layer of blank and compressing the second layer of material into a second layer of blank, where the second layer of material includes metal powder.

The sintering step includes: sintering the compressed materials formed in the material compression step.

The foam metal layer 1 and the strength enhancement layer 2 are sintered as a whole. The foam metal layer 1 and the strength enhancement layer 2 each are sintered by using different metal powders, and the foam metal layer 1 and the strength enhancement layer 2 are combined through sintering. During production, a material and parameters of the current collector (for example, porosity of the foam metal layer 1) can be controlled by controlling compositions of metal powder or a ratio of different powders, so that performance parameters of the current collector can be adjusted based on actual needs. Further, the foam metal layer 1 and the strength enhancement layer 2 being sintered helps reduce residue stress generated in the connection process, thereby ensuring that the current collector does not crack during winding.

In some embodiments, a particle size of the pore-forming agent is 0.1 mm-0.7 mm; and a particle size of the metal powder is 0.05 mm-0.1 mm. In some embodiments, the metal powder is copper powder. In some embodiments, the pore-forming agent is soluble salt or decomposable salt at high temperature, and the pore-forming agent may be NaCl or urea.

The preparation method further includes a material preparation step before the material compression step. The material preparation step includes: preparing a material of a first material layer. The preparing a material of a first material layer includes: sieving pore-forming agent particles by different particle sizes, and uniformly mixing the metal powder and the pore-forming agent. In this embodiment, the pore-forming agent particles may be spherical or quasi-spherical, and pore-forming agent particles with an average particle size of 0.1 mm-0.7 mm are obtained by sieving.

The uniformly mixing the metal powder and the pore-forming agent includes: uniformly mixing pure cooper powder with a particle size of 0.05 mm-0.1 mm and the pore-forming agent particles with the said particle size, where a volume ratio of the pure cooper powder to the pore-forming agent particles with the said particle size is 1:9-8:2, then adding an appropriate amount of an organic solvent, and stirring the mixture for 0.4 hour-1 hour, to form mixed powder.

The material preparation step includes: preparing a material of a second material layer. The preparing a material of a second material layer includes: uniformly mixing the metal powder and an organic solvent.

The material compression step further includes: laying a third layer of material for forming the foam metal layer 1 on the second layer of blank and compressing the third layer of material into a third layer of blank, where the third layer of material includes metal powder and a pore-forming agent mixed in the metal powder. In some embodiments, a third material layer has the same material as the first material layer.

The first layer of blank has the same thickness as the third layer of blank. The first layer of blank and the third layer of blank have a thickness of 10 µm-100 µm. Thickness of the second layer of blank is 4 µm-12 µm.

Compressing pressure for the first layer of material is less than or equal to compressing pressure for the third layer of material. Because the first layer of material is compressed multiple times, the compressing pressure for the first layer of material being less than or equal to the compressing pressure for the third layer of material allows a first foam metal layer 11 and a second foam metal layer 12 to have consistent performance parameters. In some embodiments, at least one of the compressing pressure for the first layer of material and the compressing pressure for the third layer of material is 100 MPa-350 MPa.

The materials are in a protection atmosphere of inert gas when being sintered, to prevent the metal powder from being oxidized during sintering. In some embodiments, the inert gas includes argon.

Specifically, the sintering step includes: placing the multiple layers of blank into the protection atmosphere for sintering at 700°C-1000°C for 5 hours-8 hours in a sintering furnace; and placing a sample obtained after sintering and cooling in cold water into flowing deionized water and absolute ethanol for full washing, to obtain a final product.

FIG. 1 shows the battery current collector in this embodiment, and the current collector is prepared by using the foregoing preparation method. Two sides of the strength enhancement layer 2 of the battery current collector are a first foam metal layer 11 and a second foam metal layer 12 respectively. The strength enhancement layer 2 is a pure cooper layer, and both the first foam metal layer 11 and the second foam metal layer 12 have a porosity of 35%-40% and a thickness of 40 µm-50 µm. Thickness of the strength enhancement layer 2 is 5 µm-6 µm. Both ends of the strength enhancement layer 2 in a width direction are flush with the foam metal layer 1.

In some embodiments, because pore-forming agent particles may be spherical or quasi-spherical, holes formed in the first foam metal layer 11 and the second foam metal layer 12 may be circular or quasi-circular closed holes or through holes in this embodiment. In some embodiments, the holes are evenly distributed in the first foam metal layer 11 and the second foam metal layer 12.

According to another aspect of this application, another preparation method of the battery current collector is further provided, and the preparation method includes a welding step and a foaming step.

The welding step includes: stacking an alloy foil for forming a foam metal layer 1 and a metal foil for forming a strength enhancement layer 2, and heating the alloy foil and the metal foil so that the alloy foil and the metal foil are welded together to form an intermediate. The foaming step includes: placing the intermediate into a corrosive solution to remove one or more elements in the alloy foil, so that the alloy foil forms the foam metal layer 1. The alloy foil and the metal foil are welded together to form a current collector, with advantages of simple processing technology and high production efficiency.

In some embodiments, the corrosive solution includes a diluted hydrochloric acid solution; the alloy foil includes a brass foil; and the metal foil includes a pure cooper foil.

In some other embodiments, the corrosive solution includes one of an ammonium sulfate solution, an electrolyte obtained by mixing H₂SO₄ and MnSO₄, an acetic acid solution, a phosphoric acid solution, and a sulphuric acid solution.

In the welding step, the alloy foil is stacked on both sides of the metal foil, so that the current collector has a symmetrical electrode structure.

The preparation method further includes a cutting step before the welding step, and the cutting step includes: cutting the alloy foil and the metal foil into standby materials with a predetermined width. In this embodiment, the alloy foil has the same width as the metal foil, so as to form a current collector with both ends of the strength enhancement layer 2 in the width direction being flush with the foam metal layer 1. In some other embodiments, the width of the alloy foil is smaller than the width of the metal foil, so as to form a current collector with one or two ends of the strength enhancement layer 2 in the width direction protruding from the foam metal layer 1.

The preparation method further includes a cleaning step of cleaning surfaces of the alloy foil and the metal foil before the welding step. In some embodiments, the cleaning step is performed after the cutting step, so as to prevent the foils from being polluted again in the cutting step.

Specifically, the cleaning step includes: immersing the alloy foil and the metal foil in an absolute ethanol solution for cleaning treatment to remove dust and metal particles from the surfaces of the foils, and then placing the alloy foil and the metal foil into an air box for air drying.

Specifically, the welding step includes: stacking the foils subjected to cleaning in order of the alloy foil, the metal foil, and the alloy foil, and then sintering the stacked foils in a sintering furnace at 700°C-920°C so that the multiple layers of foils are welded together, where sintering duration shall satisfy fusion of a contact surface between the alloy foil and the metal foil. Stacking means arranging foils in such a way that their widths completely overlap or their end portions are staggered in a width direction.

Specifically, the foaming step includes: placing the welded multi-layer foil into a diluted hydrochloric acid solution for infiltration, to remove element zinc in brass.

The preparation method further includes a washing step after the foaming step. Specifically, the washing step includes: placing the material obtained in the foaming step into clean water for ultrasonic treatment, to remove ions adsorbed on a surface, so as to obtain a final current collector.

The preparation method further includes: forming a plurality of through holes on the metal foil before the alloy foil and the metal foil are stacked, so that electrolytes on two sides of the strength enhancement layer 2 flow to each other.

FIG. 2 shows a battery current collector according to an embodiment of this application, and the current collector is prepared by using the foregoing preparation method. Two sides of a strength enhancement layer 2 of the battery current collector are a first foam metal layer 11 and a second foam metal layer 12 respectively. The strength enhancement layer 2 is a pure cooper layer, and both the first foam metal layer 11 and the second foam metal layer 12 have a porosity of 35%-40% and a thickness of 40 µm-50 µm. Thickness of the strength enhancement layer 2 is 5 µm-6 µm. One end of the strength enhancement layer 2 in a width direction protrudes from a foam metal layer 1.

FIG. 3 shows a battery current collector according to an embodiment of this application, and the current collector is prepared by using the foregoing preparation method. Two sides of a strength enhancement layer 2 of the battery current collector are a first foam metal layer 11 and a second foam metal layer 12 respectively. The strength enhancement layer 2 is a pure cooper layer, and both the first foam metal layer 11 and the second foam metal layer 12 have a porosity of 45%-50% and a thickness of 30 µm-40 µm. Thickness of the strength enhancement layer 2 is 5 µm-6 µm. Both ends of the strength enhancement layer 2 in a width direction protrude from a foam metal layer 1.

In addition, the following describes a secondary battery, a battery module, a battery pack, and an electric apparatus in this application with appropriate reference to the accompanying drawings.

An embodiment of this application provides a secondary battery.

Generally, the secondary battery includes a positive electrode plate, a negative electrode plate, an electrolyte, and a separator. In a battery charging/discharging process, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive electrode current collector and a positive electrode film layer disposed on at least one surface of the positive electrode current collector, and the positive electrode film layer includes the positive electrode active material according to the first aspect of this application.

In an example, the positive electrode current collector includes two back-to-back surfaces in a thickness direction of the positive electrode current collector, and the positive electrode film layer is disposed on either or both of the two back-to-back surfaces of the positive electrode current collector.

In some embodiments, the positive electrode current collector is the foregoing battery current collector or a battery current collector prepared by using the foregoing preparation method of battery current collector.

In some other embodiments, the positive electrode current collector may be a metal foil or a composite current collector. For example, for the metal foil, an aluminum foil may be used. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for a battery in the art. In an example, the positive electrode active material may include at least one of the following materials: olivine-structured lithium-containing phosphate, lithium transition metal oxide, and respective modified compounds thereof. However, this application is not limited to these materials, and may also use other conventional materials that can be used as the positive electrode active material of the battery. One type of these positive electrode active materials may be used alone, or two or more types may be used in combination. An example of the lithium transition metal oxide may include but is not limited to at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. An example of the olivine-structured lithium-containing phosphate may include but is not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. In an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by using the following manners: the constituents used for preparing the positive electrode plate, for example, the positive electrode active material, the conductive agent, the binder, and any other constituent, are dissolved in a solvent (for example, N-methylpyrrolidone) to form a positive electrode slurry; the positive electrode slurry is applied onto the positive electrode current collector, and processes such as drying and cold pressing are performed to obtain the positive electrode plate.

### [Negative electrode plate]

The negative electrode plate includes a negative electrode current collector and a negative electrode film layer disposed on at least one surface of the negative electrode current collector, and the negative electrode film layer includes a negative electrode active material.

In an example, the negative electrode current collector includes two back-to-back surfaces in a thickness direction of the negative electrode current collector, and the negative electrode film layer is disposed on either or both of the two back-to-back surfaces of the negative electrode current collector.

In some embodiments, the negative electrode current collector is the foregoing battery current collector or a battery current collector prepared by using the foregoing preparation method of battery current collector.

In some embodiments, the negative electrode active material may be a well-known negative electrode active material used for a battery in the art. In an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and may also use other conventional materials that can be used as the negative electrode active material of the battery. One type of these negative active materials may be used alone, or two or more types may be used in combination.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other additives, such as a thickener (for example, sodium carboxymethyl cellulose (CMC-Na)).

In some embodiments, the negative electrode plate may be prepared by using the following manners: the constituents used for preparing the negative electrode plate, for example, the negative electrode active material, the conductive agent, the binder, and any other constituent, are dissolved in a solvent (for example, deionized water) to form a negative electrode slurry; the negative electrode slurry is applied onto the negative electrode current collector, and processes such as drying and cold pressing are performed to obtain the negative electrode plate.

### [Electrolyte]

The electrolyte conducts ions between the positive electrode plate and the negative electrode plate. The electrolyte is not limited to any specific type in this application, and may be selected based on a need. For example, the electrolyte may be in a liquid state, a gel state, or an all-solid state.

In some embodiments, the electrolyte is a liquid electrolyte. The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

### [Separator]

In some embodiments, the secondary battery further includes a separator. The separator is not limited to any specific type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer thin film or a multi-layer composite thin film, and is not specifically limited. When the separator is a multi-layer composite thin film, all layers may be made of same or different materials, which is not specifically limited.

In some embodiments, the positive electrode plate, the negative electrode plate, and the separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

The secondary battery is not limited to any specific shape in this application, and the secondary battery may be cylindrical, rectangular, or of any other shape. For example, FIG. 4 shows a secondary battery 5 of a rectangular structure as an example.

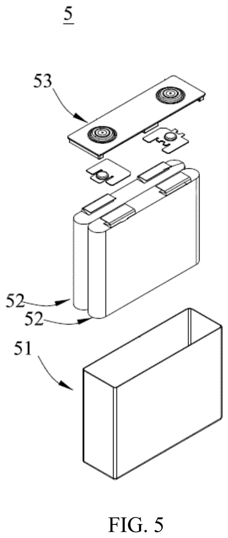

In some embodiments, referring to FIG. 5, the outer package may include a housing 51 and a cover plate 53. The housing 51 may include a base plate and a side plate connected onto the base plate, and the base plate and the side plate enclose an accommodating cavity. The housing 51 has an opening in communication with the accommodating cavity, and the cover plate 53 can cover the opening to close the accommodating cavity. A positive electrode plate, a negative electrode plate, and a separator may form an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, secondary batteries may be assembled into a battery module, and the battery module may include one or more secondary batteries. A specific quantity may be chosen by persons skilled in the art based on use and capacity of the battery module.

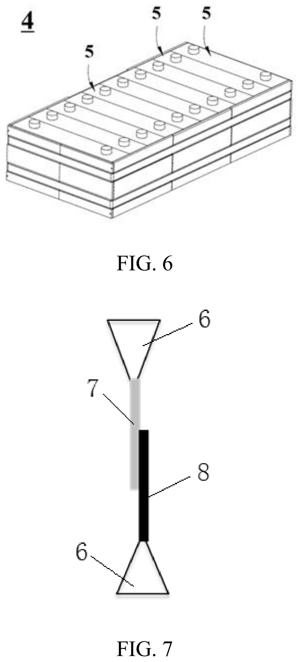

FIG. 6 shows a battery module 4 as an example. Referring to FIG. 6, in the battery module 4, a plurality of secondary batteries 5 may be sequentially arranged along a length direction of the battery module 4. Certainly, the secondary batteries may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery modules may be further assembled into a battery pack, and the battery pack may include one or more battery modules. A specific quantity may be chosen by persons skilled in the art based on use and capacity of the battery pack.

The following tables show experimental data of battery current collectors using technical means of this embodiment and battery current collectors in comparative examples. The examples described below are exemplary and only used to explain this application, but cannot be understood as limitations on this application. Examples whose technical solutions or conditions are not specified are made based on technical solutions or conditions described in documents in the art, or made based on the product specification. The reagents or instruments used are all conventional products that can be purchased on the market if no manufacturer is indicated.

Parameters and performance tests of the battery current collectors in examples and comparative examples are shown in the following tables.

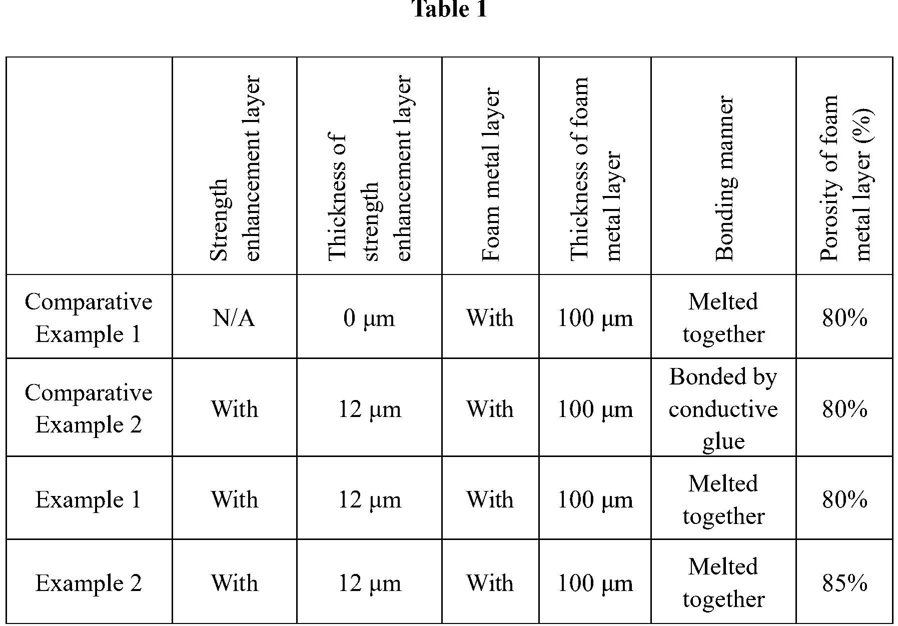

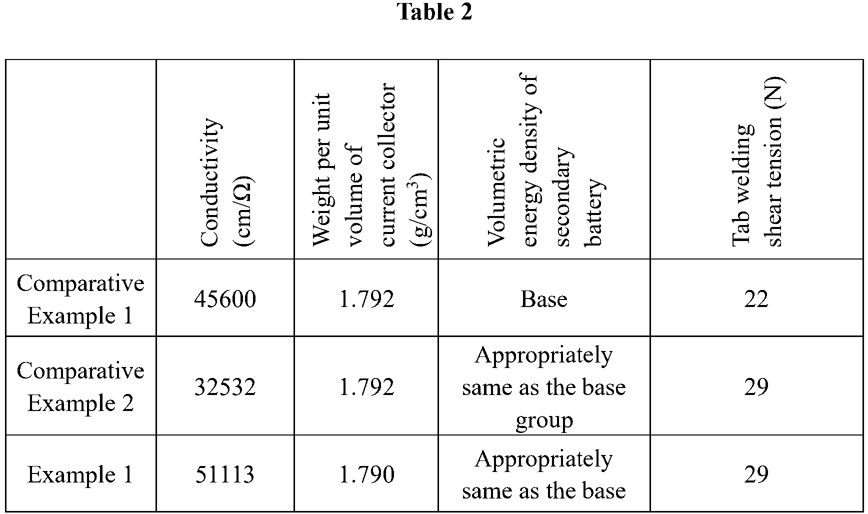

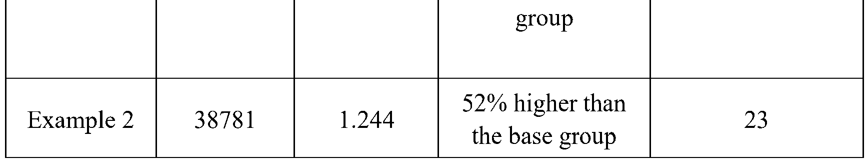

Conductivity is a parameter representing conductive performance of a material. A larger conductivity means better conductive performance of the material. Conductivity σ = 1/resistivity ρ, where the resistivity is measured by using a resistivity tester.

Resistivity test method: A test sample is embedded between two electrodes of the resistivity tester, so that they come into full contact. A ratio of direct current voltage applied to the two electrodes to current flowing through a volume of the test sample is referred to as volume resistance Rv. Resistance between two opposite surfaces of a material of 1 cm calculated by Rv and sizes of the electrodes and the test sample is referred to as volume resistivity ρv. That is, ρv = Rv * S/d (Ω/cm). In the formula, S is an area of the measured electrode, d is thickness of the test sample, and Rv is volume resistance.

Tab shear tension test method: As shown in FIG. 7, a welded sample sheet (formed by welding an adapting sheet 7 and a foil 8) is clamped, with the adapting sheet 7 and the foil 8 (a battery current collector) being clamped by an upper clamp and a lower clamp respectively, where the two clamps are on the same straight line in a horizontal direction or a vertical direction, a force direction is vertically parallel to a welding plane, and a tab cannot be torn when being clamped. The upper and lower clamps move relative to each other at a speed of 30 mm/min to stretch the sample sheet, and a tensile force applied when the sample sheet cracks is the tab welding shear tension.

A measuring method of volumetric energy density includes: preparing a secondary battery and measuring volumetric energy density of the secondary battery.

A preparation method of secondary battery is as follows.
1. A positive electrode active substance NCM811, a conductive agent acetylene black, and a binder polyvinylidene difluoride (PVDF) were fully stirred and uniformly mixed in an N-methylpyrrolidone solvent system at a mass ratio of 94:3:3, and then the mixture was applied onto an aluminum foil, followed by drying and cold pressing, to obtain a positive electrode plate.
2. A negative electrode active substance artificial graphite, a conductive agent acetylene black, a binder styrene-butadiene rubber (SBR), and a thickener sodium carboxymethyl cellulose (CMC) were fully stirred and uniformly mixed in a deionized water solvent system at a mass ratio of 90:5:2:2:1, and then the mixture was applied onto the current collectors in the examples and comparative examples, followed by drying and cold pressing, to obtain a negative electrode plate.
3. A polyethylene (PE) porous polymer thin film was used as a separator.
4. The positive electrode plate, the separator, and the negative electrode plate were stacked in sequence, so that the separator was disposed between positive and negative electrodes for separation, and wound to obtain a bare cell. The bare cell was placed into an outer package, and a lithium hexafluorophosphate electrolyte with a concentration of 1 M (20% ethylene carbonate and 30% dimethyl carbonate as a solvent and 50% ethyl methyl carbonate by volume) was injected, followed by packaging, to obtain a secondary battery.

A method for measuring volumetric energy density of secondary battery is as follows.
1. The foregoing prepared secondary batteries were left standing for 5 min at a constant temperature of 25°C, and was discharged to 2.8 V at 1/3C. After being left standing for 5 min again, the secondary batteries were charged to 4.2 V at 1/3C, and then were charged to a current less than or equal to 0.05C at a constant voltage of 4.2 V. After the secondary batteries were left standing for 5 min again, a charging capacity in this case was recorded as C0. Then, the secondary batteries were discharged to 2.8 V at 1/3C, and a discharging capacity in this case was an initial discharging capacity, and was recorded as D0.
2. A measured discharging capacity value (that is, initial discharging capacity D0) was multiplied by platform voltage U of a system and divided by a housing volume V of the batteries to obtain volumetric energy density of the batteries.

A preparation process of Comparative Example 1 is as follows.
1. Commercially available globose NaCl salt balls (purity ≥ 99%) were used as a pore-forming agent, subjected to sieving, to obtain salt balls with an average particle size of 0.1 mm for use.
2. The NaCl particles with an average particle size of 0.1 mm obtained by sieving in step 1, electrolytic copper powder (purity ≥ 99.5%) purchased on the market, and ethanol were uniformly mixed, and then the mixture was added into a compression mold, and unidirectionally pressurized to 200 MPa, to obtain a green compact. The electrolytic copper powder and the NaCl particles were 1792 grams and 1728 grams respectively; and with respect to total mass of the electrolytic copper powder and NaCl, the ethanol added was 70.4 grams.
3. The green compact prepared in step 2 was placed into an argon atmosphere, sintered at 740°C for 3 hours in a sintering furnace, and then sintered for 5 hours at a temperature increased to 920°C.
4. The article obtained in step 3 was cooled to room temperature with the furnace, a surface of the article was removed by using a wire, and then the article was placed into cycling hot water to dissolve the NaCl particles. After the mass of the article no longer changes, the article was placed into ultrasonic water bath for washing for 15 min, then washed by using acetone, and dried at 80°C in an oven, to obtain a porous foamy copper with a porosity of 80%.

A preparation process of Comparative Example 2 is as follows.
1. Commercially available globose NaCl salt balls (purity ≥ 99%) were used as a pore-forming agent, subjected to sieving, to obtain salt balls with an average particle size of 0.1 mm for use.
2. The NaCl particles with an average particle size of 0.1 mm obtained by sieving in step 1, electrolytic copper powder (purity ≥ 99.5%) purchased on the market, and ethanol were uniformly mixed, and then the mixture was added into a compression mold, and unidirectionally pressurized to 200 MPa, to obtain a green compact. The electrolytic copper powder and the NaCl particles were 1792 grams and 1728 grams respectively; and with respect to total mass of the electrolytic copper powder and NaCl, the ethanol added was 70.4 grams.
3. The green compact prepared in step 2 was placed into an argon atmosphere, sintered at 740°C for 3 hours in a sintering furnace, and then sintered for 5 hours at a temperature increased to 920°C.
4. The article obtained in step 3 was cooled to room temperature with the furnace, a surface of the article was removed by using a wire, and then the article was placed into cycling hot water to dissolve the NaCl particles. After the mass of the article no longer changes, the article was placed into ultrasonic water bath for washing for 15 min, then washed by using acetone, and dried at 80°C in an oven, to obtain a porous foamy copper with a porosity of 80%.
5. Two porous foamy coppers obtained in step 4 were taken. A layer of commercially available conductive carbon glue (DAG-T-502 glue produced by TED PELLA, INC., USA, 30g/bottle) was uniformly applied onto one surface of one of the porous coppers, with a gluing thickness of 10 µm, and then the porous copper was bonded with the other porous foamy copper to obtain a foamy copper bonded by using the conductive glue.

A preparation process of Example 1 is as follows.
1. Commercially available globose NaCl salt balls (purity ≥ 99%) were used as a pore-forming agent, subjected to sieving, to obtain salt balls with an average particle size of 0.1 mm for use.
2. The NaCl particles with an average particle size of 0.1 mm obtained by sieving in step 1, electrolytic copper powder (purity ≥ 99.5%) purchased on the market, and ethanol weighing 2% of total mass of the electrolytic copper powder and NaCl were uniformly mixed, and then the mixture was added into a compression mold, and unidirectionally pressurized to 200 MPa, to obtain a first layer of green compact. A mixture of the electrolytic copper powder and ethanol was laid flat on the first layer, and was unidirectionally pressurized to 200 MPa, to obtain a second layer of green compact. The mixture of the NaCl particles, purchased electrolytic copper powder, and ethanol was laid flat on the second layer, and was unidirectionally pressurized to 200 MPa, to obtain a third layer of green compact. The electrolytic copper powder and the NaCl particles were 1792 grams and 1728 grams respectively, and ethanol was 70.4 grams.
3. The green compact prepared in step 2 was placed into an argon atmosphere, sintered at 740°C for 3 hours in a sintering furnace, and then sintered for 5 hours at a temperature increased to 920°C.
4. The article obtained in step 3 was cooled to room temperature with the furnace, a surface of the article was removed by using a wire, and then the article was placed into cycling hot water to dissolve the NaCl particles. After the mass of the article no longer changes, the article was placed into ultrasonic water bath for washing for 15 min, then washed by using acetone, and dried at 80°C in an oven, to obtain a porous foamy copper. The porosity of the current collector in Example 1 was 80%.

A preparation process of Example 2 is as follows.
1. Commercially available globose NaCl salt balls (purity ≥ 99%) were used as a pore-forming agent, subjected to sieving, to obtain salt balls with an average particle size of 0.1 mm for use.
2. The NaCl particles with an average particle size of 0.1 mm obtained by sieving in step 1, electrolytic copper powder (purity ≥ 99.5%) purchased on the market, and ethanol weighing 2% of total mass of the electrolytic copper powder and NaCl were uniformly mixed, and then the mixture was added into a compression mold, and unidirectionally pressurized to 200 MPa, to obtain a first layer of green compact. A mixture of the electrolytic copper powder and ethanol was laid flat on the first layer, and was unidirectionally pressurized to 200 MPa, to obtain a second layer of green compact. The mixture of the NaCl particles, purchased electrolytic copper powder, and ethanol was laid flat on the second layer, and was unidirectionally pressurized to 200 MPa, to obtain a third layer of green compact. The electrolytic copper powder and the NaCl particles were 1344 grams and 1836 grams respectively, and ethanol was 63.6 grams.
3. The green compact prepared in step 2 was placed into an argon atmosphere, sintered at 740°C for 3 hours in a sintering furnace, and then sintered for 5 hours at a temperature increased to 920°C.
4. The article obtained in step 3 was cooled to room temperature with the furnace, a surface of the article was removed by using a wire, and then the article was placed into cycling hot water to dissolve the NaCl particles. After the mass of the article no longer changes, the article was placed into ultrasonic water bath for washing for 15 min, then washed by using acetone, and dried at 80°C in an oven, to obtain a porous foamy copper. The porosity of the current collector in Example 2 was 85%.
Further embodiments of the present invention are provided in the following. It should be noted that the numbering used in the following section does not necessarily need to comply with the numbering used in the previous sections.
1. A battery current collector, comprising:
   a foam metal layer (1); and
   a strength enhancement layer (2), wherein the strength enhancement layer (2) is a sheet-shaped metal layer, and the strength enhancement layer (2) and the foam metal layer (1) are stacked and metallurgically bonded.
2. The battery current collector according to embodiment 1, wherein
   the foam metal layer (1) and the strength enhancement layer (2) are welded together; or
   the foam metal layer (1) and the strength enhancement layer (2) are sintered as a whole.
3. The battery current collector according to embodiment 1 or 2, wherein the foam metal layer (1) comprises a first foam metal layer (11) disposed on one side of the strength enhancement layer (2) and a second foam metal layer (12) disposed on the other side of the strength enhancement layer (2).
4. The battery current collector according to any one of embodiments 1 to 3, wherein the strength enhancement layer (2) is provided with a through hole.
5. The battery current collector according to any one of embodiments 1 to 4, wherein the battery current collector comprises a current collector body and an end portion located on an outer side of the current collector body along a width direction and used for forming a tab, wherein the current collector body comprises the foam metal layer (1) and the strength enhancement layer (2) that are stacked, and the end portion comprise the strength enhancement layer (2).
6. The battery current collector according to any one of embodiments 1 to 5, wherein
   both ends of the strength enhancement layer (2) in the width direction are flush with the foam metal layer (1); or
   one end of the strength enhancement layer (2) in the width direction protrudes from the foam metal layer (1), and the other end is flush with the foam metal layer (1); or
   both ends of the strength enhancement layer (2) in the width direction protrude from the foam metal layer (1).
7. The battery current collector according to any one of embodiments 1 to 6, wherein
   the foam metal layer (1) is made of at least one of copper, nickel, aluminum, iron, magnesium, titanium, steel, and alloy; and/or
   the strength enhancement layer (2) is made of at least one of copper, nickel, aluminum, iron, magnesium, titanium, steel, and alloy.
8. The battery current collector according to any one of embodiments 1 to 7, wherein
   thickness of the foam metal layer (1) is 10 µm-100 µm; and/or
   thickness of the strength enhancement layer (2) is 4 µm-12 µm.
9. The battery current collector according to any one of embodiments 1 to 8, wherein porosity of the foam metal layer (1) is 20%-90%, and optionally, the porosity of the foam metal layer (1) is 80%-85%.
10. A preparation method of battery current collector, comprising:
   a material compression step, comprising: laying a first layer of material for forming a foam metal layer (1) and compressing the first layer of material into a first layer of blank, wherein the first layer of material comprises metal powder and a pore-forming agent mixed in the metal powder; and laying a second layer of material for forming a strength enhancement layer (2) on the first layer of blank and compressing the second layer of material into a second layer of blank, wherein the second layer of material comprises metal powder; and
   a sintering step, comprising: sintering the compressed materials formed in the material compression step.
11. The preparation method according to embodiment 10, wherein the material compression step further comprises: laying a third layer of material for forming the foam metal layer (1) on the second layer of blank and compressing the third layer of material into a third layer of blank, wherein the third layer of material comprises metal powder and a pore-forming agent mixed in the metal powder.
12. The preparation method according to embodiment 11, wherein compressing pressure for the first layer of material is less than or equal to compressing pressure for the third layer of material.
13. The preparation method according to embodiment 11 or 12, wherein
   the compressing pressure for the first layer of material is 150 MPa-350 MPa; and
   the compressing pressure for the third layer of material is 150 MPa-350 MPa.
14. The preparation method according to any one of embodiments 10 to 13, wherein
   the materials are in a protection atmosphere of inert gas when being sintered; and/or sintering temperature of the materials is 700°C-1000°C; and/or
   sintering duration of the materials is 5 hours-8 hours.
15. A preparation method of battery current collector, comprising:
   a welding step, comprising: stacking an alloy foil for forming a foam metal layer (1) and a metal foil for forming a strength enhancement layer (2), and heating the alloy foil and the metal foil so that the alloy foil and the metal foil are welded together to form an intermediate; and
   a foaming step, comprising: placing the intermediate into a corrosive solution to remove one or more elements in the alloy foil, so that the alloy foil forms the foam metal layer (1).
16. The preparation method according to embodiment 15, wherein in the welding step, the alloy foil is stacked on both sides of the metal foil.
17. The preparation method according to embodiment 15 or 16, wherein
   the corrosive solution comprises at least one of a diluted hydrochloric acid solution, an ammonium sulfate solution, an electrolyte obtained by mixing H₂SO₄ and MnSO₄, an acetic acid solution, a phosphoric acid solution, and a sulphuric acid solution; and/or
   the alloy foil comprises a brass foil; and/or
   the metal foil comprises a pure cooper foil.
18. The preparation method according to any one of embodiments 15 to 17, wherein a plurality of through holes are formed on the metal foil before the alloy foil and the metal foil are stacked.
19. A secondary battery, comprising the battery current collector according to any one of embodiments 1 to 9 or a battery current collector prepared by using the preparation method according to any one of embodiments 10 to 18.
20. A battery module, characterized by comprising the secondary battery according to embodiment 19.
21. A battery pack, characterized by comprising the battery module according to embodiment 20.
22. An electric apparatus, characterized by comprising at least one of the secondary battery according to embodiment 19, the battery module according to embodiment 20, or the battery pack according to embodiment 21.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. A battery current collector, comprising:
a foam metal layer (1); and
a strength enhancement layer (2), wherein the strength enhancement layer (2) is a sheet-shaped metal layer, and the strength enhancement layer (2) and the foam metal layer (1) are stacked and metallurgically bonded;
wherein porosity of the foam metal layer (1) is 80%-85%.

2. The battery current collector according to claim 1, wherein
the foam metal layer (1) and the strength enhancement layer (2) are welded together; or
the foam metal layer (1) and the strength enhancement layer (2) are sintered as a whole.

3. The battery current collector according to claim 1 or 2, wherein the foam metal layer (1) comprises a first foam metal layer (11) disposed on one side of the strength enhancement layer (2) and a second foam metal layer (12) disposed on the other side of the strength enhancement layer (2).

4. The battery current collector according to any one of claims 1 to 3, wherein the strength enhancement layer (2) is provided with a through hole.

5. The battery current collector according to any one of claims 1 to 4, wherein the battery current collector comprises a current collector body and an end portion located on an outer side of the current collector body along a width direction and used for forming a tab, wherein the current collector body comprises the foam metal layer (1) and the strength enhancement layer (2) that are stacked, and the end portion comprise the strength enhancement layer (2).

6. The battery current collector according to any one of claims 1 to 5, wherein
both ends of the strength enhancement layer (2) in the width direction are flush with the foam metal layer (1); or
one end of the strength enhancement layer (2) in the width direction protrudes from the foam metal layer (1), and the other end is flush with the foam metal layer (1); or
both ends of the strength enhancement layer (2) in the width direction protrude from the foam metal layer (1).

7. The battery current collector according to any one of claims 1 to 6, wherein
the foam metal layer (1) is made of at least one of copper, nickel, aluminum, iron, magnesium, titanium, steel, and alloy; and/or
the strength enhancement layer (2) is made of at least one of copper, nickel, aluminum, iron, magnesium, titanium, steel, and alloy;
and/or
wherein
thickness of the foam metal layer (1) is 10 µm-100 µm; and/or
thickness of the strength enhancement layer (2) is 4 µm-12 µm

8. A preparation method of battery current collector, comprising:
a material compression step, comprising: laying a first layer of material for forming a foam metal layer (1) and compressing the first layer of material into a first layer of blank, wherein the first layer of material comprises metal powder and a pore-forming agent mixed in the metal powder; and laying a second layer of material for forming a strength enhancement layer (2) on the first layer of blank and compressing the second layer of material into a second layer of blank, wherein the second layer of material comprises metal powder; and
a sintering step, comprising: sintering the compressed materials formed in the material compression step.

9. The preparation method according to claim 8,
wherein the material compression step further comprises: laying a third layer of material for forming the foam metal layer (1) on the second layer of blank and compressing the third layer of material into a third layer of blank, wherein the third layer of material comprises metal powder and a pore-forming agent mixed in the metal powder, wherein preferably,
compressing pressure for the first layer of material is less than or equal to compressing pressure for the third layer of material;
and/or
the compressing pressure for the first layer of material is 150 MPa-350 MPa; and
the compressing pressure for the third layer of material is 150 MPa-350 MPa;
and/or
wherein
the materials are in a protection atmosphere of inert gas when being sintered; and/or sintering temperature of the materials is 700°C-1000°C; and/or
sintering duration of the materials is 5 hours-8 hours.

10. A preparation method of battery current collector, comprising:
a welding step, comprising: stacking an alloy foil for forming a foam metal layer (1) and a metal foil for forming a strength enhancement layer (2), and heating the alloy foil and the metal foil so that the alloy foil and the metal foil are welded together to form an intermediate; and
a foaming step, comprising: placing the intermediate into a corrosive solution to remove one or more elements in the alloy foil, so that the alloy foil forms the foam metal layer (1).

11. The preparation method according to claim 10, wherein in the welding step, the alloy foil is stacked on both sides of the metal foil;
and/or
wherein
the corrosive solution comprises at least one of a diluted hydrochloric acid solution, an ammonium sulfate solution, an electrolyte obtained by mixing H₂SO₄ and MnSO₄, an acetic acid solution, a phosphoric acid solution, and a sulphuric acid solution; and/or
the alloy foil comprises a brass foil; and/or
the metal foil comprises a pure cooper foil;
and/or
wherein a plurality of through holes are formed on the metal foil before the alloy foil and the metal foil are stacked.

12. A secondary battery, comprising the battery current collector according to any one of claims 1 to 7 or a battery current collector prepared by using the preparation method according to any one of claims 8 to 11.

13. A battery module, **characterized by** comprising the secondary battery according to claim 12.

14. A battery pack, **characterized by** comprising the battery module according to claim 13.

15. An electric apparatus, **characterized by** comprising at least one of the secondary battery according to claim 12, the battery module according to claim 13, or the battery pack according to claim 14.
